(19) Europäisches Patentamt / European Patent Office / Office européen des brevets

(11) **EP 2 496 656 B1**

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **10776624.8**

(22) Anmeldetag: **28.10.2010**

(51) Int Cl.:
***C09J 133/00*** (2006.01) ***C09J 133/06*** (2006.01)
***C09J 133/08*** (2006.01) ***G09F 3/10*** (2006.01)

(86) Internationale Anmeldenummer:
**PCT/EP2010/066322**

(87) Internationale Veröffentlichungsnummer:
**WO 2011/051373 (05.05.2011 Gazette 2011/18)**

(54) **MIT WASCHFLÜSSIGKEIT ABLÖSBARE KLEBEETIKETTEN**

LABELS REMOVABLE BY WASHING LIQUIDS

ETIQUETTES AMOVIBLES PAR LIQUIDE DE NETTOYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2009 US 257068 P**

(43) Veröffentlichungstag der Anmeldung:
**12.09.2012 Patentblatt 2012/37**

(73) Patentinhaber: **BASF SE**
**67056 Ludwigshafen (DE)**

(72) Erfinder:
- **CIMPEANU, Carmen-Elena**
  **67059 Ludwigshafen (DE)**
- **BEYERS, Cornelis, Petrus**
  **67122 Altrip (DE)**
- **DRAGON, Andree**
  **67346 Speyer (DE)**
- **TORRES LLOSA, Jose Maria**
  **67071 Ludwigshafen (DE)**
- **MÄURER, Ralf**
  **67136 Fußgönheim (DE)**
- **FLAMING, Erika**
  **67227 Frankenthal (DE)**
- **WERNZ, Uwe**
  **69121 Heidelberg (DE)**
- **MIETH, Pascal**
  **67071 Ludwigshafen (DE)**

(56) Entgegenhaltungen:
**US-A1- 2006 142 493**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft sogenannte Wash-Off Etiketten. Dabei handelt es sich um Klebeetiketten mit wasserunlöslichem Trägermaterial, welche mittels einer Klebstoffzusammensetzung auf einen Gegenstand aufklebbar sind und welche mit Waschflüssigkeit von dem Gegenstand wieder ablösbar sind. Die Klebstoffzusammensetzung ist eine Weichmacher enthaltende wässrige Dispersion eines verzweigten oder vernetzten Acrylatcopolymers mit einer Glasübergangstemperatur von kleiner oder gleich -20 °C, aufgebaut aus $C_1$ bis $C_{20}$ Alkyl(meth)acrylaten, ethylenisch ungesättigten, copolymerisierbaren $C_3$- bis $C_6$-Mono- oder Dicarbonsäuren und optional weiteren Monomeren.

Bei der Verwendung von mehrfach wiederverwendeten Mehrwegbehältern, z.B. Bier-, Wasser- oder Limonadeflaschen in der Getränkeindustrie, unterliegen die verwendeten Behältnisse hohen Mehrwegquoten. Die Behältnisse werden bei jedem Rücklauf vor der Neubefüllung gereinigt, wobei beim Waschen der Behältnisse auch die Etiketten entfernt werden. Anschließend werden die Behältnisse neu befüllt und entsprechend dem eingefüllten Getränketyp neu etikettiert. Sind die Behältnisse für eine bestimmte Produktgruppe standardisiert, z.B. eine Bierflasche, so brauchen die zur Brauerei zurücklaufenden Flaschen nicht nach Biersorten vorsortiert zu werden, wie dies bei dauerhaft vordekorierten Flaschen der Fall wäre. Die unterschiedliche Etikettierung erfolgt in der Regel erst nach der Befüllung. Bei einer nicht abwaschbaren Direktbedruckung der Flasche müssten hohe Lagervorräte an jeweils passend vordekorierten Flaschen bereitgehalten werden. In der Getränkeindustrie erfolgt das Waschen der Behältnisse in der Regel mit heißer Waschflüssigkeit, wie etwa verdünnter Natronlauge, erhitzt auf 60 bis 90 °C, ohne zusätzliche mechanische Unterstützung in Form von Bürsten, Hochdruckdüsen usw.

Wegen der standardisierten Abwaschbedingungen in der Getränkeindustrie werden bisher meistens Etiketten auf Papierbasis und wasserlösliche Nassleimklebstoffe auf Caseinbasis verwendet. Beim Abwaschen der Etiketten in der Waschstation wird die Wasserdurchlässigkeit von Papier dahingehend ausgenutzt, dass der üblicherweise verwendete Nassleimklebstoff relativ schnell mit der Waschflüssigkeit vollflächig in Kontakt kommt und sich in der vorgegebenen Waschzeit - im Bereich einiger Minuten - vollständig ablöst, wobei dann aber der Klebstoff in der Regel in der Waschflüssigkeit in Lösung geht. Dies hat den Nachteil, dass erhebliche Mengen an mit Klebstoffresten belastetem Abwasser entstehen. Insbesondere die häufig verwendeten Etikettenklebstoffe auf Caseinbasis ergeben eine starke Kontamination des Waschwassers. Es sind daher Klebstoffsysteme erwünscht, welche das Waschwasser möglichst wenig kontaminieren.

Häufig sind sogenannte "no label look"-Etiketten gewünscht. Hierbei handelt es sich um durchsichtige Kunststofffolienetiketten, welche den Blick auf den Inhalt des Behältnisses freilassen und beim Betrachter den Eindruck hervorrufen, dass das Behältnis kein Etikett aufweist sondern direkt bedruckt oder beschriftet ist. Anstelle von Papier werden hierfür Kunststofffolien als Trägermaterial verwendet. Kunststofffolien haben den Nachteil, dass sie nicht die hohe Permeabilität für Waschflüssigkeit besitzen wie Papier. Solche Folien verhindern den Zutritt der Waschflüssigkeit zur Grenzfläche von Klebstoff und Behälteroberfläche, so dass sich die nicht permeablen Folienetiketten bei Verwendung von herkömmlichem Klebstoff nur langsam vom Etikettenrand her ablösen lassen, was ohne zusätzliche mechanische Unterstützung wie etwa Bürsten, Hochdruckstrahl etc. in einer wirtschaftlich vertretbaren Zeitspanne keine vollständige Ablösung des Etiketts gestattet. Diese mechanischen Mittel sind des höheren Aufwands wegen unerwünscht. Aus der WO 01/46329 ist bekannt, in der Waschflüssigkeit sich auflösenden Klebstoff und sich auflösendes Trägermaterial zu verwenden. Dies führt zwar zu einer schnelleren Ablösung aber auch zu einer unerwünschten, hohen Belastung des Abwassers mit organischen Reststoffen. Aus der EP 951004 ist bekannt, Folienetiketten zu verwenden, welche bei erhöhter Temperatur in der Waschvorrichtung durch Rückschrumpfen die Form verändern, wobei die hierbei auftretenden Kräfte größer sind als die Klebekräfte und sich das Etikett ablöst. Der Nachteil von sich krümmenden, sich aufrollenden oder anderweitig die planare Form verändernden Etiketten ist, dass sie beim Waschvorgang einen relativ hohen Volumenbedarf haben und bei Verwendung von Standardwaschvorrichtungen der Getränkeindustrie zu einem Verstopfen der verwendeten, relativ engen Körbchen führen können, in welche die Flaschen individuell für den Waschvorgang eingesetzt werden. Formverändernde oder perforierte Folienetiketten, wie sie zur Verbesserung des Ablöseverhaltens bekannt sind, sind außerdem wegen der erforderlichen Vor- oder Nachbehandlung oder eines erforderlichen Mehrschichtaufbaus aufwändiger in der Herstellung. Gewünscht ist daher ein Klebstoffsystem, mit welchem auch herkömmliche, nicht permeable und nicht lösliche Folien, insbesondere nicht perforierte und auch unter Wärmeeinwirkung formstabile Folien sicher und schnell abgewaschen werden können, wobei das Waschwasser möglichst wenig kontaminiert werden soll. Eine weitere wichtige Anforderung an Etiketten für Mehrwegbehälter ist, dass sie zwar möglichst schnell mit heißer Waschflüssigkeit ablösbar sein sollen, andererseits aber eine Verklebung zeigen, welche gegenüber Kontakt mit Feuchtigkeit oder Wasser wie z.B. bei Lagerung im Freien (Bewitterung mit Regenwasser) oder beim Kühlen und Kontakt mit Kondens- oder Eiswasser möglichst resistent ist. Außerdem sollte das Klebstoffsystem gesundheitlich möglichst unbedenklich sein, sodass ein Einsatz auf Nahrungsmittelbehältern besonders vorteilhaft ist. Es stellt eine besondere Herausforderung dar, ein Klebstoffsystem zu finden, welches die genannten, zum Teil gegensätzlichen Anforderungen erfüllt.

Der Erfindung liegt die Aufgabe zugrunde, abwaschbare Klebeetiketten mit einem Klebstoffsystem zur Verfügung zu stellen, welche bei normaler Lagerung und Kühlung der beklebten Gegenstände eine möglichst hohe Resistenz gegen vorzeitiges Ablösen der Etiketten zeigen, die beim Waschen mit warmer Waschlösung aber möglichst schnell und ohne Rückstände ablösbar sind, wobei der Klebstoff möglichst vollständig auf dem abgelösten Etikett verbleibt und möglichst weder in das Waschwasser gelangt noch möglichst keine Rückstände auf dem Substrat hinterlässt, wobei kein besonders vorbehandeltes oder beim Waschen die Form veränderndes Trägermaterial benötigt wird und der Klebstoff gesundheitlich möglichst unbedenklich ist.

Die Aufgabe wird erfindungsgemäß gelöst durch ein Klebeetikett mit wasserunlöslichem Trägermaterial, welches mittels darauf aufgebrachten Klebstoffzusammensetzung auf einen Gegenstand aufklebbar ist und welches mit basischer, wässriger Waschflüssigkeit bei Temperaturen größer 25°C von dem Gegenstand wieder ablösbar ist, wobei es sich bei der Klebstoffzusammensetzung um eine wässrige Polymerdispersion handelt, enthaltend

a) mindestens ein dispergiertes, durch radikalische Polymerisation erhältliches, wasserunlösliches Acrylatcopolymer, welches verzweigt oder vernetzt ist, eine Glasübergangstemperatur von kleiner oder gleich -20 °C aufweist und welches

a1) zu mindestens 60 Gew.%, bezogen auf die Summe der Monomere, aus Hauptmonomeren, ausgewählt aus $C_1$ bis $C_{20}$ Alkylacrylaten und $C_1$ bis $C_{20}$ Alkylmethacrylaten,
a2) zu 0,05 bis 3 Gew.%, bezogen auf die Summe der Monomere, aus wenigstens einer ethylenisch ungesättigten, copolymerisierbaren $C_3$- bis $C_6$-Mono- oder Dicarbonsäure und
a3) zu 0 bis 39,95 Gew.% bezogen auf die Summe der Monomere, aus weiteren,
von den Monomeren a1 und a2 verschiedenen Monomeren, aufgebaut ist und

b) mindestens einen Weichmacher; und
wobei die Verzweigung oder Vernetzung des Acrylatcopolymers durch ein Verzweigungs- oder Vernetzungssystem erfolgt, welches ausgewählt ist aus

(i) in einer Menge von 0,01 bis 0,8 Gew.%, bezogen auf die Summe der Monomere, copolymerisierten, verzweigenden oder vernetzenden Monomeren, ausgewählt aus Monomeren mit mindestens zwei radikalisch polymerisierbaren, ethylenisch ungesättigten Gruppen, und
(ii) Zusatz von wenigstens einer Aminotriazinverbindung.

Vorzugsweise handelt es sich bei dem Verzweigungs- oder Vernetzungssystem um lebensmittelrechtlich zugelassene Stoffe.

Das Klebeetikett weist ein Trägermaterial mit darauf aufgebrachter Klebstoffzusammensetzung auf. Das Trägermaterial ist wasserunlöslich, d.h. es löst sich nicht in Wasser bei Raumtemperatur (25°C) und idealerweise auch nicht bei den Temperaturen des Waschvorgangs, die bei 55 bis 90 °C, z.B. bei 80 °C liegen können. Das Trägermaterial kann Papier oder eine Kunststofffolie sein. Das Trägermaterial ist vorzugsweise ausgewählt aus Polyethylen, Polypropylen, PVC, Cellulose, Polyacetat, Polyester und Cycloolefin Copolymer (COC). Die Dicke der Folien ist vorzugsweise von 10 bis 200 $\mu$m oder von 30 bis 100 $\mu$m. Vorzugsweise handelt es sich bei den Kunststoffolien um Folien, die keine Schrumpffolien sind, die nicht gereckt sind und/oder unter Wärmeeinwirkung beim Abwaschen keine Formveränderungen zeigen.

Das Klebeetikett ist ablösbar mit einer basischen Waschflüssigkeit bei erhöhten Temperaturen von größer 25°C. Die Waschflüssigkeit hat einen basischen pH- Wert, insbesondere von 9 bis 11, z.B. ca. 8. Die Waschtemperatur ist dabei vorzugsweise mindestens 50°C insbesondere 60 bis 90°C. Geeignet ist z.B. 1-2%ige wässrige Natronlauge.

Bei der Klebstoffzusammensetzung handelt es sich um eine wässrige Polymerdispersion. Die erfindungsgemäße Polymerdispersion bildet nach Aufbringen auf das Trägermaterial und nach Trocknen eine Klebebeschichtung. Bei den erfindungsgemäßen Polymerdispersionen handelt es sich um Dispersionen von Polymeren in wässrigem Medium. Bei dem wässrigen Medium kann es sich z.B. um vollständig entsalztes Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer

4 insbesondere auf einen pH-Wert zwischen 5 und 9 eingestellt.

Im Folgenden werden gelegentlich die Bezeichnung "(Meth)acryl..." und ähnliche Bezeichnungen als abkürzende Schreibweise verwendet für "Acryl... oder Methacryl...".

Der als Bindemittel fungierende Wirkstoff der Klebstoffzusammensetzung ist ein durch radikalische Polymerisation, insbesondere durch Emulsionspolymerisation von radikalisch polymerisierbaren Monomeren herstellbares Acrylatcopolymer. Das Polymer ist wasserunlöslich, d.h. es löst sich in entsalztem, neutralem Wasser bei Raumtemperatur (25°C) zu weniger als 5 Gew.%, insbesondere zu weniger als 1 Gew.%. Das Polymer besteht zu mindestens 60 Gew.-%, bevorzugt zu mindestens 80 Gew.-%, z.B. von 80 bis 99,9 Gew.%, bezogen auf die Summe der Monomere, aus einem oder mehreren Hauptmonomeren (a1), ausgewählt aus der Gruppe bestehend aus $C_1$-$C_{20}$-Alkylacrylaten, $C_1$-$C_{20}$-Alkylmethacrylaten oder deren Gemisch. Als Hauptmonomere bevorzugt sind die $C_1$- bis $C_{10}$-Alkyl(meth)acrylate, insbesondere $C_1$- bis $C_8$-Alkyl(meth)-acrylate oder $C_4$- bis $C_8$-Alkyl(meth)acrylate und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat sowie Mischungen dieser Monomere.

Neben den Hauptmonomeren enthält das Polymer mindestens ein Säuremonomer (a2) in einer Menge von 0,05 bis 3 Gew.%, vorzugsweise von 0,2 bis 2 Gew.%. Bei den Säuremonomeren handelt es sich um ethylenisch ungesättigte, copolymerisierbare $C_3$-bis $C_6$-Mono- oder Dicarbonsäure. Geeignete Säuremonomere sind z.B. Acrylsäure, Methacrylsäure, Itaconsäure, Maleinsäure, Fumarsäure oder deren Gemisch. Besonders bevorzugt sind Acrylsäure, Methacrylsäure oder deren Gemisch. Der Säuregehalt ist vorteilhafterweise so gewählt, dass er möglichst gering ist, damit der Klebstoff beim Waschvorgang nicht oder möglichst wenig in der basischen Waschlösung gelöst oder redispergiert wird sondern im Wesentlichen an dem Etikett haften bleibt. Andererseits wird der Säuregehalt so gewählt, dass er hoch genug ist, damit sich beim Kontakt mit der basischen Waschflüssigkeit an der Grenzfläche zwischen Klebstoff und Substratoberfläche eine ausreichend hohe Änderung der Polarität stattfindet, sodass sich das Etikett und daran haftender Klebstoff möglichst schnell und vollständig von der Substratoberfläche ablösen.

Neben den Hauptmonomeren und den Säuremonomeren kann das Polymer weitere Monomere (a3) in einer Menge von insgesamt 0 bis 39,95 oder 0,1 bis 39 Gew.% enthalten. Die weiteren Monomere können ausgewählt sein aus Monomeren mit mindestens zwei radikalisch polymerisierbaren, ethylenisch ungesättigten Gruppen, copolymerisierbaren Monomeren mit mindestens einer Ketongruppe, Vinylestern von bis zu 20 C-Atome enthaltenden Carbonsäuren, Vinylaromaten mit bis zu 20 C-Atomen, ethylenisch ungesättigten Nitrilen, Acrylamiden, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomere. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril. Beispiele für Acrylamide sind Acrylamid und Methacrylamid. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt ist Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als weiteres Monomer bevorzugt ist insbesondere Styrol. Weitere Monomere sind z. B. auch Hydroxylgruppen enthaltende Monomere, insbesondere $C_1$-$C_{10}$-Hydroxyalkyl-(meth)acrylate. Als weitere Monomere seien darüber hinaus Phenyloxyethylglykolmono-(meth-)acrylat, Glycidylacrylat, Glycidylmethacrylat, Amino-(meth-)acrylate wie 2-Aminoethyl-(meth)acrylat genannt.

Das Acrylatcopolymer ist verzweigt oder vernetzt. In einer Ausführungsform erfolgt die Verzweigung oder Vernetzung des Acrylatcopolymers dadurch, dass in einer Menge von 0,01 bis 0,8 Gew.%, vorzugsweise von 0,01 bis 0,06 Gew.%, bezogen auf die Summe der Monomere, mindestens ein verzweigendes oder vernetzendes Monomer copolymerisiert ist. Bei den verzweigenden oder vernetzenden Monomeren handelt es sich um Monomere mit mindestens zwei radikalisch polymerisierbaren, ethylenisch ungesättigten Gruppen. Geeignete verzweigende oder vernetzende Monomere sind z.B. mehrfunktionelle Acrylate oder mehrfunktionelle Methacrylate, insbesondere Alkandioldiacrylate oder Alkandioldimethacrylate mit vorzugsweise 2 bis 8 C-Atomen in der Alkangruppe. Geeignet sind z.B. Ethylenglycoldiacrylat, Propylenglycoldiacrylat, Polyethyleneglycoldiacrylat, Hexandioldiacrylat, Ethylenglycodimethacrylat, Diethylenglycoldimethacrylat, 1,3 Butanglycoldimethacrylat. Tri(meth)acrylate sind z.B. Trimethylolpropanetrimethacrylae, ethoxyliertes Trimethylolpropantriacrylat, Pentaerythritoltriacrylate, Pentaerythritoltrimethacrylat oder Trimethylolpropantrimethacrylat. Weitere geeignete vernetzende oder verzweigende Monomer sind Divinylverbindungen, insbesondere Divinylester wie z.B. Divinylbenzol, Divinylsuccinat, Divinyladipat, Divinylmaleat, Divinyloxalat, Divinylmalonat oder Divinylglutarat. Besonders bevorzugt sind die oben genannten Alkandioldi(meth)acrylate.

In einer weiteren Ausführungsform erfolgt die Verzweigung oder Vernetzung durch Zusatz von wenigstens einer Aminotriazinverbindung. Die Menge an Aminotriazinverbindung beträgt vorzugsweise von 0,01 bis 3 Gew.-Teile, insbesondere von 0,1 bis 2 Gew.-Teile und insbesondere bevorzugt von 0,2 bis 1,5 Gew.-Teile, bezogen auf 100 Gew.-Teile Acrylatcopolymer. Aminotriazinverbindungen sind z.B. Melamin, Benzoguanamin, Acetoguanamin und Bisguanamine wie Adipo-, Glutaro- oder Methylglutarobisguanamin und Spiroguanamine. In Betracht kommen auch Verbindungen, welche mehrere, z.B. kondensierte, Aminotriazinkerne enthalten. Die Aminotriazinverbindungen sind vorzugsweise zumindest teilweise methyloliert und verethert. Bevorzugt ist zumindest teilweise methyloliertes und verethertes Melamin und entsprechende Verbindungen, welche mehrere Melaminkerne, z.B. 2 bis 5 über Methylolgruppen verbrückte Melamine enthalten, oder deren Gemische. Bevorzugte Aminotriazine enthalten im Mittel 1 bis 3, insbesondere 1 Melaminkern je Molekül. Bevorzugt sind insbesondere Melamin/Formaldhyd-Harze. Die Aminotriazine sind im Mittel mit mindestens 1 Mol, vorzugsweise mindestens 1,4 Mol, besonders bevorzugt mit mindestens 1,7 Mol Formaldehyd pro Val primärer Aminogruppen methyloliert und diese Methylolgruppen im Mittel mit mindestens 0,5 Mol, vorzugsweise mindestens 0,6 Mol und besonders bevorzugt mit mindestens 0,7 Mol primären Alkoholen pro Val Methylolgruppe verethert. Hierfür bevorzugte primäre Alkohole sind insbesondere $C_1$-$C_4$-Alkanole. Besonders bevorzugt ist Methanol. Eine bevorzugte Aminotriazinverbindung ist z.B. Hexamethoxymethylolmelamin, wobei jede Aminogruppe des Melamins mit 2 Formaldehydgruppen methyloliert, jede Methylolgruppe mit Methanol verethert ist. Bevorzugte Aminotriazinverbindungen haben eine Wasserlöslichkeit von mindestens 500 g/Liter Wasser (21 °C, 1 atm absolut). Die Aminotriazinverbindungen werden häufig in Form ihrer wässrigen Lösungen eingesetzt. Entsprechende Produkte sind dem Fachmann geläufig und beispielsweise unter dem Markennamen Luwipal® 073 oder Saduren® 163 (Produkte der Fa. BASF SE) am Markt frei käuflich verfügbar.

Die Herstellung der Klebstoffformulierung durch Mischen von Acrylatcopolymer und Aminotriazinverbindung ist unkritisch und kann prinzipiell in beliebiger Reihenfolge erfolgen, insbesondere dann, wenn das Acrylatcopolymer in Form einer wässrigen Polymerdispersion und die Aminotriazinverbindung in Form einer wässrigen Lösung eingesetzt werden. Bevorzugt wird jedoch die wässrige Lösung der Aminotriazinverbindung zur wässrigen Dispersion des Acrylatcopolymeren gegeben. Handelt es sich um eine wässrige Klebstoffformulierung (wässrige Dispersion von Acrylatcopolymer und wässrige Lösung von Aminotriazinverbindung; Gesamtmenge an organischen Lösungsmitteln ≤ 5 Gew.-%, bevorzugt ≤ 3 Gew.-% und insbesondere bevorzugt ≤ 1 Gew.-%, jeweils bezogen auf die wässrige Klebstoffformulierung), so beträgt der Gehalt an Acrylatcopolymer und Aminotriazinverbindung in Summe ≥ 10 und ≤ 70 Gew.-%, bevorzugt ≥ 20 und ≤ 65 Gew.-% und insbesondere bevorzugt ≥ 45 und ≤ 60 Gew.-%, jeweils bezogen auf die wässrige Klebstoffformulierung.

Das Acrylatcopolymer weist eine Glasübergangstemperatur von kleiner oder gleich -20°C, vorzugsweise kleiner oder gleich -40°C oder kleiner oder gleich -50°C oder kleiner oder gleich -55 °C auf. Dabei ist mit der Glasübergangstemperatur Tg, der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Als Glasübergangstemperatur Tg ist im Rahmen dieser Schrift diejenige Glasübergangstemperatur gemeint, welche nach dem DSC-Verfahren (Differential Scanning Calorimetry, 20 K/min, midpoint-Messung, DIN 53765) ermittelt werden kann. Durch die sogenannte Foxgleichung ist es dem Fachmann möglich, Acrylatcopolymere im geeigneten Tg-Bereich zu identifizieren und diese durch geeignete Variation von Art und Menge der Monomeren gezielt herzustellen. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die Herstellung der Polymere kann durch Emulsionspolymerisation erfolgen, es handelt sich dann um ein Emulsionspolymerisat. Hierbei werden häufig Dispergierhilfsmittel mitverwendet, die sowohl die Monomerentröpfchen als auch die durch die radikalisch initiierte Polymerisation erhaltenen Teilchen des entstandenen Polymers in der wässrigen Phase dispers verteilt halten und so die Stabilität der erzeugten wässrigen Polymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht. In der Regel beträgt die Menge an eingesetztem Dispergierhilfsmittel, insbesondere Emulgatoren, 0,1 bis 10 Gew.-%, bevorzugt 1 bis 5 Gew.-%, jeweils bezogen auf die Gesamtmonomerenmenge.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Als Schutzkolloide in Betracht kommen z. B. amphiphile Polymere, also Polymere mit hydrophoben und hydrophilen Gruppen. Es kann sich um natürliche Polymere, wie Stärke oder um synthetische Polymere handeln.

Als Emulgatoren kommen sowohl anionische, kationische als auch nichtionische Emulgatoren in Betracht. Selbstverständlich können auch Gemische aus Emulgatoren und/oder Schutzkolloiden verwendet werden. Vorteilhaft werden jedoch als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxylierte Mono-, Di- und Tri-Alkylphenole (EO-Grad: 3 bis 50, Alkylrest: $C_4$ bis $C_{12}$), ethoxylierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel (I)

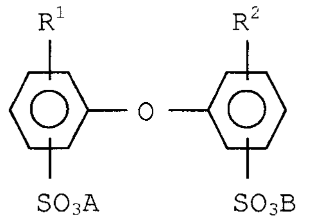

Formel I

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Bevorzugt werden zur Herstellung des Acrylatcopolymers ausschließlich nichtionische und/oder anionische Emulgatoren verwendet.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder

Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Regler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureethylacrylester, Mercaptoethanol, Mercaptopropyltrimethoxysilan, Ethylhexylthioglykolat, n-Dodecylmercaptan oder tert.-Dodecylmercaptan. Weiterhin können Regler ohne Thiolgruppe verwendet werden, wie z.B. Terpinolen.

Selbstverständlich können bei der Herstellung des Acrylatcopolymers durch radikalisch initiierte wässrige Emulsionspolymerisation auch weitere, dem Fachmann geläufige optionale Hilfsstoffe, wie beispielsweise sogenannte Verdicker, Entschäumer, Neutralisationsmittel, Puffersubstanzen, Konservierungsmittel, radikalkettenübertragende Verbindungen und/oder anorganische Füllstoffe eingesetzt werden.

Die Klebstoffzusammensetzung enthält mindestens einen Weichmacher. Weichmacher können die Glasübergangstemperatur des Polymers herabsetzen. Die Einsatzmenge der Weichmacher beträgt vorzugsweise 0,1 bis 20 Gew.-Teile, vorzugsweise mindestens 1, besonders bevorzugt mindestens 2 Gew.-Teile, bezogen auf 100 Gew.-Teile Acrylatcopolymer. Die Menge beträgt vorzugsweise maximal 10 Gew.-Teile, besonders bevorzugt maximal 7 Gew.-Teile auf 100 Gew.-Teile Polymer. Sehr gute Ergebnisse werden z.B. mit einer Menge von 2 bis 10 Gew.-Teilen auf 100 Gew.-Teile Polymer erreicht. Weichmacher sind z.B. Ester von geeigneten Säuren und Alkoholen, wobei die Alkohole vorzugsweise 6 bis 13 C-Atome aufweisen. Geeignet sind z.B. Phthalate oder Terephtalate (z.B. Butylbenzylphthalat oder Dioctylphthalat, Diethylphthalat, Dimethylphthalat, Dibutylphthalat, Dioctylterephthalat), Adipate (z.B. Dioctyladipat), Benzoate, Citrate (z.B. Triethylcitrat oder Acetyltributylcitrat), Maleate, Oleate, Phosphate, Sebacate. Stearate, epoxidierte pflanzliche Öle, Rosin-Derivate, Triethyleneglycol-di-2-ethylhexanoat, Trioctyltrimellitat, Glyceryltriacetat, 2,2,4-Trimethyl-1, 3-pentandioldiisobutyrat, Dipropylenglycolbenzoat oder polymere Weichmacher (z.B. niedrigmolekulare Acrylatpolymere, welche die Tg und den Storage Modulus des Acryaltcopolymers absenken) oder weichmachende Polyalkylenoxide (z.B. weichmachende Polyethylenoxide) oder Sulfonamide (z.B. Toluolsulfonamid) und ähnliche. Besonders bevorzugt sind flüssige Weichmacher, d.h. Weichmacher, die bei 20°C flüssig sind.

In einer bevorzugten Ausführungsform ist der Weichmacher ein aliphatischer Mono- oder Diester, gebildet aus einer acyclischen oder cyclischen Dicarbonsäure mit 4- bis 20 C-Atomen und $C_4$- bis $C_{20}$-Hydroxyalkanen, insbesondere ein bei 20°C flüssiges Dialkyladipat oder Dialkylester von Cyclohexandicarbonsäuren. Die Mono- oder Diester können durch eine übliche Veresterung von Carbonsäure und Hydroxyalkan hergestellt werden. Bei der Dicarbonsäure handelt es sich insbesondere um eine Dicarbonsäure mit 4 bis 8 oder 4 bis 6 C-Atomen. Ganz besonders bevorzugt handelt es sich um eine $C_4$-Dicarbonsäure, insbesondere Adipinsäure oder um 1,2-Cyclohexyldicarbonsäure. Bei dem Hydroxyalkan handelt es sich insbesondere um ein Hydroxyalkan mit 6 bis 15, besonders bevorzugt mit 6 bis 11 C-Atomen. Insbesondere handelt es sich um ein Hydroxyalkan mit 9 C-Atomen. Vorzugsweise handelt es sich um ein lineares Hydroxyalkan, bei dem das C-Atom an einem Kettenende durch eine Methylgruppe substituiert ist (iso-Verbindung) und das C-Atom am entgegengesetzten Kettenende durch die Hydroxygruppe substituiert ist. Besonders bevorzugt handelt es sich bei dem Weichmacher um einen Diester, d.h. beide Carbonsäuregruppen sind mit einem Hydroxyalkan verestert. Eine besonders bevorzugte Verbindung ist Diisononyladipat (CAS Nummer 33703-08-1), welche unter dem Handelsnamen Plastomoll® DNA erhältlich ist. Ein anderer geeigneter Weichmacher ist der Düsononylester von 1,2-Cyclohexyldicarbonsäure (Hexamoll Dinch®). Das Acrylatcopolymer, bzw. die wässrige Dispersion des Acrylatcopolymeren kann in einfacher Weise mit dem Mono- oder Diester gemischt werden. Die erhaltene Mischung ist lagerstabil.

Die Klebstoffzusammensetzung ist vorzugweise einkomponentig und nicht strahlenhärtbar muss also nicht vor der Anwendung mit einer zweiten Reaktivkomponente vermischt werden und muss nicht zur Aushärtung oder Aktivierung des Klebstoffs bestrahlt werden.

Das erfindungsgemäße Klebeetikett weist ein wasserunlösliches Trägermaterial auf, auf welchem die Klebstoffzusammensetzung aufgebracht ist. Das Trägermaterial kann beispielsweise Papier oder vorzugsweise eine Kunststofffolie sein. Geeignete Folienmaterialien sind z.B. ausgewählt aus Polyolefinen (insbesondere Polyethylen, Polypropylen), Polyolefincopolymeren, Cellulose, Polyacetat und Polyester (insbesondere bioabbaubare Polylactate. Die Etiketten sind einseitig mit Klebstoff beschichtet, wobei die beschichtete Oberfläche zumindest teilweise mit einer erfindungsgemäßen Klebstoffzusammensetzung beschichtet ist. Der Klebstoff kann nach üblichen Methoden wie Rakeln oder Streichen auf die Artikel aufgetragen werden. Die Auftragsmenge beträgt bevorzugt 5 bis 30 g, insbesondere 10 bis 20 g, besonders bevorzugt 12 bis 15 g Feststoff pro $m^2$. Nach dem Auftragen folgt im Allgemeinen ein Trocknungsschritt zur Entfernung des Wasser bzw. der Lösungsmittel.

Für eine gute Ablösbarkeit ist es nicht unbedingt erforderlich, dass das Klebeetikett perforiert ist oder ähnliche Hilfsmittel aufweist, um einen schnellen Kontakt von Waschwasser und Klebstoff beim Waschvorgang zu ermöglichen. Erfindungsgemäß ist auch ohne derartige Hilfsmittel ein ausreichend schnelles Ablösen des Etiketts vom Substrat möglich. Es ist auch nicht unbedingt erforderlich, dass das Etikett beim Waschvorgang seine Form verändert, um mittels der bei der Formveränderung auftretenden Kräfte die Ablösung des Etiketts zu erleichtern. Bevorzugt sind daher Klebeetiketten, bei denen das Trägermaterial nicht perforiert ist und unter Abwaschbedingungen formstabil ist.

Bei erfindungsgemäßen Klebeetiketten bleiben nach dem Aufkleben auf ein Substrat (z.B. Glas oder Kunststoff wie z.B. Polyethylenterephtalat) und späterem Ablösen des Etiketts mit basischer, wässriger Waschflüssigkeit vorzugsweise mindestens 95 Gew.%, insbesondere 97 bis 100 Gew.% des Acrylatcopolymers der Klebstoffzusammensetzung auf dem abgelösten Etikett haften.

In einer Ausführungsform der Erfindung handelt es sich um ein Klebeetikett, bei welchem es sich bei dem Trägermaterial um eine Kunststofffolie handelt und bei welchem es sich bei dem Vernetzersystem um copolymerisiertes Alkandioldiacrylat handelt.

In einer weiteren Ausführungsform der Erfindung handelt es sich um ein Klebeetikett, bei welchem es sich bei dem Trägermaterial um Papier handelt und bei welchem es sich bei dem Vernetzersystem um einen Zusatz von Melamin/ Formaldehyd-Harz handelt.

Gegenstand der Erfindung ist auch die Verwendung der oben näher beschriebenen Klebstoffzusammensetzung zur Herstellung von mit basischer, wässriger Waschflüssigkeit von wieder verwendbaren Verpackungen mit Glas- oder Kunststoffoberflächen ablösbaren Klebeetiketten. Gegenstand der Erfindung ist auch ein Verfahren zum Ablösung von Klebeetiketten mit basischer, wässriger Waschflüssigkeit von Substratoberflächen. Hierbei wird eine Klebstoffzusammensetzung bereitgestellt, bei der sich um eine wässrige Polymerdispersion handelt, enthaltend

a) mindestens ein dispergiertes, durch radikalische Polymerisation erhältliches, wasserunlösliches Acrylatcopolymer, welches verzweigt oder vernetzt ist, eine Glasübergangstemperatur von kleiner oder gleich -20 °C aufweist und welches

a1) zu mindestens 60 Gew.%, bezogen auf die Summe der Monomere, aus Hauptmonomeren, ausgewählt aus $C_1$ bis $C_{20}$ Alkylacrylaten und $C_1$ bis $C_{20}$ Alkylmethacrylaten,
a2) zu 0,05 bis 3 Gew.%, bezogen auf die Summe der Monomere, aus wenigstens einer ethylenisch ungesättigten, copolymerisierbaren $C_3$- bis $C_6$-Mono-oder Dicarbonsäure und
a3) zu 0 bis 39,95 Gew.% bezogen auf die Summe der Monomere, aus weiteren, von den Monomeren a1 und a2 verschiedenen Monomeren, aufgebaut ist und

b) mindestens einen Weichmacher; und
wobei die Verzweigung oder Vernetzung des Acrylatcopolymers durch ein Verzweigungs- oder Vernetzungssystem erfolgt, welches ausgewählt ist aus

(i) in einer Menge von 0,01 bis 0,8 Gew.%, bezogen auf die Summe der Monomere, copolymerisierten, verzweigenden oder vernetzenden Monomeren, ausgewählt aus Monomeren mit mindestens zwei radikalisch polymerisierbaren, ethylenisch ungesättigten Gruppen, und
(ii) Zusatz von wenigstens einer Aminotriazinverbindung.

Es wird ein Etikett, vorzugsweise aus Papier oder in Form einer Kunststofffolie bereitgestellt und mit der Klebstoffzusammensetzung einseitig ganz oder teilweise beschichtet. Das mit Klebstoff beschichtete Etikett wird auf ein Substrat, z.B. eine Lebensmittelverpackung aus Glas oder Kunststoff, insbesondere eine Getränkeflasche, aufgeklebt. Bevorzugte Verpackungen sind Flaschen aus Glas oder Kunststoff, z.B. aus Polyethylenterephtalat. Das Etikett wird durch Waschen mit einer erwärmten, basischen Waschflüssigkeit entfernt. Die Temperatur der Waschflüssigkeit ist größer 25°C, vorzugsweise mindestens 50°C, z.B. 60 bis 90 °C oder ca. 80 °C. Der pH-Wert der Waschflüssigkeit ist basisch, d.h. größer als 7, insbesondere von 9 bis 11, z.B. ca. 10.

Die erfindungsgemäßen Klebeetiketten zeichnen sich dadurch aus, dass sie auch nach längerer Lagerung im Freien, was normalerweise zu einer Verschlechterung der Abwaschbarkeit führt, noch schnell und rückstandsfrei abwaschbar sind, insbesondere auch bei Verwendung von Kunststofffolienetiketten, welche normalerweise wegen ihrer Wasserundurchlässigkeit schlecht ablösbar sind. Es wird vermutet, dass die Klebstoffschicht, welche erfindungsgemäß

geringe Mengen an Säuren enthält, bei Kontakt mit basischer Waschflüssigkeit zu quellen beginnt und sich Kanäle an der Grenzfläche zwischen Klebstoff und Glas bilden, die einen schnellen Zutritt des Waschwassers ermöglichen und durch eine Änderung der Oberflächenspannung der gequollenen Klebstoffschicht die Adhäsion zwischen Klebstoffoberfläche und Glasoberfläche abnimmt und sich das Etikett unter Adhäsionsbruch der Klebstoffschicht von dem Substrat löst. Die Kombination von Säuregehalt, Vernetzung und Weichmachergehalt führt zu einer ausreichend stabilen Verklebung unter Gebrauchsbedingungen, einer hinreichend schnellen Ablösung mit Waschwasser und einer rückstandslosen Ablösung ohne das Waschwasser mit Klebstoffresten zu kontaminieren.

Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Es wurden die folgenden Einsatzstoffe verwendet:

Lumiten I-SC: anionisches Tensid, Natrium Sulfobernsteinsäure, 58%ig
Collacral ® DS 3555: Verdicker; Fettalkoholethoxylat-Urethan, 20%ig

Beispiel B1

Klebstoffzusammensetzung:

| | |
|---|---|
| 83,57 Gew.-% | Acrylatcopolymer aus 1 Gew.-Teil Acrylsäure, 5 Gew.-Teilen Methylacrylat, 27,3 Gew.-Teilen Ethylhexylacrylat, 63,66 Gew.-Teilen n-Butylacrylat, 3 Gew.-Teilen Styrol und 0,04 Gew.-Teilen 1,4-Butandioldi-acrylat |
| 3,19 Gew.-% | Weichmacher (Diisononyladipat) |
| 0,83 Gew.-% | Tensid (Lumiten ® I-SC) |
| 0,2 Gew.-% | Verdicker (Collacral ® DS 3555) |
| 12,21 Gew.-% | Wasser, vollentsalzt |

Vergleichsbeispiel V1

wie Beispiel B1, ohne Weichmacher

Vergleichsbeispiel V2

Wässrige Dispersion eines Acrylatcopolymers aus 0,5 Gew.-Teil Acrylsäure, 8 Gew.-Teilen Methylacrylat, 7,9 Gew.-Teilen Methylmethacrylat, 78,8 Gew.-Teilen Ethylhexylacrylat, 2 Gew.-Teilen Styrol, 2 Gew.-Teilen Hydroxypropylacrylat und 0,8 Gew.-Teile Natriumvinylsulfonat.

Vergleichsbeispiel V3

Wässrige Dispersion eines Acrylatcopolymers aus 0,75 Gew.-Teilen Acrylsäure, 5 Gew.-Teilen Vinylacetat, 90,25 Gew.-Teilen Ethylhexylacrylat, 2 Gew.-Teilen Hydroxypropylacrylat und 2 Gew.-Teilen Styrol.

Beispiel B2

64,5 Gew.-Teile Acrylatcopolymer aus Beispiel V3
16,5 Gew.-Teile Wasser, vollentsalzt
0,7 Gew.-Teile Tensid (Lumiten ® I-SC)
0,1 Gew.-Teile Entschäumer (Drewplus® T 3211)
0,4 Gew.-Teile Melamin-Vernetzer (Saduren® 163)
14,4 Gew.-Teile Kolophoniumharzester
0,1 Gew.-Teile Verdicker (Collacral ® DS 3555)

2,9 Gew.-Teile Weichmacher (Diisononyladipat)
pH-Einstellung auf etwa 5,0 mit Natronlauge (ca. 0,4-0,5 Gew.-Teile)

Vergleichsbeispiel V4

Klebstoffzusammensetzung:

| | |
|---|---|
| 83,57 Gew.-% | Acrylatcopolymer aus 1 Gew.-Teil Acrylsäure, 5 Gew.-Teilen Methylacrylat, 28 Gew.-Teilen Ethylhexylacrylat, 63 Gew.-Teilen n-Butylacrylat, 3 Gew.-Teilen Styrol |
| 3,19 Gew.-% | Weichmacher (Diisononyladipat) |
| 0,83 Gew.-% | Tensid (Lumiten ® I-SC) |
| 0,2 Gew.-% | Verdicker (Collacral ® DS 3555) |
| 12,21 Gew.-% | Wasser, vollentsalzt |

Wash-Off Test nach Bewitterung

Folienetiketten aus Polyethylenfolien mit einer Dicke von 80 μm (Renolit® PE 80μ) wurden mit 13-15 g/$m^2$ (fest) der Klebstoffzusammensetzungen B1 bzw. V1-3 beschichtet und nach dem Trocknen auf Glasflaschen aufgeklebt.
Papieretiketten (Adicar® WS HG 4) wurden mit 14-17 g/$m^2$ (fest) der Klebstoffzusammensetzungen B2 bzw. V4 beschichtet und nach dem Trocknen auf Glasflaschen aufgeklebt.
Nach 30 Tagen Lagerung im Freien (Außenbewitterung) wurden die Etiketten bei 80°C mit einer Waschflüssigkeit (2%ige wässrige NaOH-Lösung, 0,5% Calgonit® 1144) abgelöst. Es wurde die Zeit gemessen bis zur vollständigen Ablösung des Etiketts und es wurde die Form des abgelösten Etiketts beurteilt. Die Ergebnisse sind in den folgenden Tabellen zusammengefasst.

Tabelle 1: Wash-Off Tests Folienetiketten

| | Ablösezeit nach Lagerung 7d | Ablösezeit nach Lagerung 30d outdoor | Etikettenform nach Ablösung |
|---|---|---|---|
| B1 | 10-30 s | 10-40 s | glatt, formstabil |
| V1 (ohne Weichmacher) | 30-40 s | 40-80 s | glatt, formstabil |
| Schrumpffolie (CCL) | 10-20 s | 10-20 s | schrumpft, rollt sich zusammen |
| V2 | | nach 10 min noch 100%ige Verklebung | keine Ablösung |
| V3 (ohne Vernetzer) | | nach 10 min noch 100%ige Verklebung | keine Ablösung |
| V4 | > 3 min | | |

Tabelle 2: Wash-Off Tests Papieretiketten

| | Ablösezeit nach Lagerung 7d | Ablösezeit nach Lagerung 30d outdoor | Etikettenform nach Ablösung |
|---|---|---|---|
| B2 (CR092) | 20-30 s | 30-50 s | glatt, formstabil |
| V3 | | nach 10 min noch 100%ige Verklebung | keine Ablösung |

Die erfindungsgemäßen Beispiele zeigen einen Adhäsionsbruch der Klebstoffschicht beim Ablösen, d.h. der Klebstoff bleibt am Etikett haften, ohne dass Rückstände auf der Glasflasche verbleiben.
Die erfindungsgemäßen Zusammensetzungen B1 und B2 zeichnen sich gegenüber den Vergleichszusammensetzungen durch eine unerwartete Kombination vorteilhafter Eigenschaften aus hinsichtlich guter Ablösung auch nach längerer Außenbewitterung und hinsichtlich glatter, planarer Etikettenformen nach dem Ablösen, wodurch die Gefahr einer Blockierung der Waschvorrichtung vermindert wird.

## Patentansprüche

1. Klebeetikett mit wasserunlöslichem Trägermaterial, welches mittels einer darauf aufgebrachten Klebstoffzusammensetzung auf einen Gegenstand aufklebbar ist und welches mit basischer, wässriger Waschflüssigkeit bei Temperaturen größer 25°C von dem Gegenstand wieder ablösbar ist, wobei es sich bei der Klebstoffzusammensetzung um eine wässrige Polymerdispersion handelt, enthaltend

    a) mindestens ein dispergiertes, durch radikalische Polymerisation erhältliches, wasserunlösliches Acrylatcopolymer, welches verzweigt oder vernetzt ist, eine Glasübergangstemperatur von kleiner oder gleich -20 °C aufweist und welches

        a1) zu mindestens 60 Gew.%, bezogen auf die Summe der Monomere, aus Hauptmonomeren, ausgewählt aus $C_1$ bis $C_{20}$ Alkylacrylaten und $C_1$ bis $C_{20}$ Alkylmethacrylaten,
        a2) zu 0,05 bis 3 Gew.%, bezogen auf die Summe der Monomere, aus wenigstens einer ethylenisch ungesättigten, copolymerisierbaren $C_3$- bis $C_6$-Mono- oder Dicarbonsäure und
        a3) zu 0 bis 39,95 Gew.% bezogen auf die Summe der Monomere, aus weiteren, von den Monomeren a1 und a2 verschiedenen Monomeren, aufgebaut ist und

    b) mindestens einen Weichmacher; und
    wobei die Verzweigung oder Vernetzung des Acrylatcopolymers durch ein Verzweigungs- oder Vernetzungssystem erfolgt, welches ausgewählt ist aus

        (i) in einer Menge von 0,01 bis 0,8 Gew.%, bezogen auf die Summe der Monomere, copolymerisierten, verzweigenden oder vernetzenden Monomeren, ausgewählt aus Monomeren mit mindestens zwei radikalisch polymerisierbaren, ethylenisch ungesättigten Gruppen, und
        (ii) Zusatz von wenigstens einer Aminotriazinverbindung.

2. Klebeetikett nach dem vorhergehenden Anspruch, **dadurch gekennzeichnet, dass** das weitere Monomer a3) ausgewählt ist aus Monomeren mit mindestens zwei radikalisch polymerisierbaren, ethylenisch ungesättigten Gruppen, copolymerisierbaren Monomeren mit mindestens einer Ketongruppe, Vinylestem von bis zu 20 C-Atome enthaltenden Carbonsäuren, Vinylaromaten mit bis zu 20 C-Atomen, ethylenisch ungesättigten Nitrilen, Acrylamiden, Vinylhalogeniden, Vinylethem von 1 bis 10 C Atome enthaltenden Alkoholen, aliphatischen Kohlenwasserstoffen mit 2 bis 8 C Atomen und ein oder zwei Doppelbindungen oder Mischungen dieser Monomere.

3. Klebeetikett nach einem der vorhergehenden Ansprüche, **dadurch gekennzeichnet, dass** die Säuremonomere a2) ausgewählt sind aus Acrylsäure, Methacrylsäure und deren Gemisch.

4. Klebeetikett nach einem der vorhergehenden Ansprüche, **dadurch gekennzeichnet, dass** die Hauptmonomere a1) ausgewählt sind aus C4- bis C8-Acrylaten, C4- bis C8-Methacrylaten und deren Mischungen.

5. Klebeetikett nach einem der vorhergehenden Ansprüche, **dadurch gekennzeichnet, dass** das Acrylatcopolymer eine Glasübergangstemperatur von -40 bis -60 °C aufweist.

6. Klebeetikett nach einem der vorhergehenden Ansprüche, **dadurch gekennzeichnet, dass** die Klebstoffzusammensetzung einkomponentig und nicht strahlenhärtbar ist.

7. Klebeetikett nach einem der vorhergehenden Ansprüche, **dadurch gekennzeichnet, dass** die Verzweigung oder Vernetzung des Acrylatcopolymers durch ein Verzweigungs- oder Vernetzungssystem erfolgt, welches ausgewählt ist aus

    (i) in einer Menge von 0,01 bis 0,8 Gew.%, bezogen auf die Summe der Monomere, copolymerisierten, Alkandioldi(meth)acrylaten, und
    (ii) Zusatz von Melamin/Formaldehyd-Harz.

8. Klebeetikett nach einem der vorhergehenden Ansprüche, **dadurch gekennzeichnet, dass** der Weichmacher ausgewählt ist aus bei 20 °C flüssigen Dialkyladipaten.

9. Klebeetikett nach einem der vorhergehenden Ansprüche, **dadurch gekennzeichnet, dass** das Acrylatcopolymer der Klebstoffzusammensetzung nach dem Ablösen des Etiketts mit basischer, wässriger Waschflüssigkeit zu mindestens 95 Gew.% auf dem abgelösten Etikett haften bleibt.

10. Klebeetikett nach einem der vorhergehenden Ansprüche, **dadurch gekennzeichnet, dass** das Trägermaterial nicht perforiert ist und unter Abwaschbedingungen formstabil ist.

11. Klebeetikett nach einem der vorhergehenden Ansprüche, **dadurch gekennzeichnet, dass** das Trägermaterial ausgewählt ist aus Papier, Polyethylen, Polypropylen, Cellulose, Polyacetat und Polyester.

12. Klebeetikett nach einem der vorhergehenden Ansprüche, **dadurch gekennzeichnet, dass** die Auftragmenge der Klebstoffzusammensetzung von 10 -20 g/$m^2$ Feststoff beträgt.

13. Klebeetikett nach einem der vorhergehenden Ansprüche, **dadurch gekennzeichnet, dass** es sich entweder bei dem Trägermaterial um eine Kunststoffe und bei dem Vernetzersystem um copolymerisiertes Alkandiol-diacrylat handelt oder dass es
sich bei dem Trägermaterial um Papier und bei dem Vernetzersystem um einen Zusatz von Melamin/Formaldehyd-Harz handelt.

14. Verwendung einer Klebstoffzusammensetzung zur Herstellung von mit basischer.
wässriger Waschflüssigkeit von wieder verwendbaren Verpackungen mit Glas- o-der Kunststoffoberflächen ablösbaren Klebeetiketten, wobei es sich bei der Klebstoffzusammensetzung um eine wässrige Polymerdispersion handelt, enthaltend

a) mindestens ein dispergiertes, durch radikalische Polymerisation erhältliches.
wasserunlösliches Acrylatcopolymer, welches verzweigt oder vernetzt ist, eine Glasübergangstemperatur von kleiner oder gleich -20 °C aufweist und welches

a1) zu mindestens 60 Gew.%, bezogen auf die Summe der Monomere, aus
Hauptmonomeren, ausgewählt aus $C_1$ bis $C_{20}$ Alkylacrylaten und $C_1$ bis $C_{20}$ Alkylmethacrylaten,
a2) zu 0,05 bis 3 Gew.%, bezogen auf die Summe der Monomere, aus wenigstens einer ethylenisch ungesättigten, copolymerisierbaren $C_3$- bis $C_6$-Mono- oder Dicarbonsäure und
a3) zu 0 bis 39,95 Gew.% bezogen auf die Summe der Monomere, aus weiteren, von den Monomeren a1 und a2 verschiedenen Monomeren, aufgebaut ist und

b) mindestens einen Weichmacher: und
wobei die Verzweigung oder Vernetzung des Acrylatcopolymers durch ein Verzweigungs- oder Vernetzungssystem erfolgt, welches ausgewählt ist aus

(i) in einer Menge von 0,01 bis 0,8 Gew.%, bezogen auf die Summe der Monomere, copolymerisierten, verzweigenden oder vernetzenden Monomeren, ausgewählt aus Monomeren mit mindestens zwei radikalisch polymerisierbaren, ethylenisch ungesättigten Gruppen, und
(ii) Zusatz von wenigstens einer Aminotriazinverbindung.

15. Verwendung nach dem vorherigen Anspruch, **dadurch gekennzeichnet, dass** die Ablösung mit einer Waschflüssigkeit mit einem pH von 9 bis 11 und bei einer Temperatur von 60 bis 90°C erfolgt.

## Claims

1. An adhesive label with water-insoluble backing material, which can be adhered to an article by means of an adhesive composition applied to said adhesive label and which is redetachable from said article with basic, aqueous wash liquid at temperatures greater than 25°C, said adhesive composition comprising an aqueous polymer dispersion comprising

a) at least one dispersed, water-insoluble acrylate copolymer which is obtainable by free-radical polymerization, which is branched or crosslinked, which has a glass transition temperature of less than or equal to -20°C, and which is constructed of

a1) at least 60% by weight, based on the sum of the monomers, of principal monomers selected from $C_1$ to $C_{20}$ alkyl acrylates and $C_1$ to $C_{20}$ alkyl methacrylates,
a2) 0.05% to 3% by weight, based on the sum of the monomers, of at least one ethylenically unsaturated, copolymerizable, $C_3$ to $C_6$ monocarboxylic or dicarboxylic acid, and
a3) 0% to 39.95% by weight, based on the sum of the monomers, of further monomers, different from the monomers a1 and a2, and

b) at least one plasticizer; and
the branching or crosslinking of the acrylate copolymer taking place through a branching system or crosslinking system which is selected from

(i) in an amount of 0.01% to 0.8% by weight, based on the sum of the monomers, copolymerized, branching or crosslinking monomers selected from monomers having at least two free-radically polymerizable, ethylenically unsaturated groups, and
(ii) addition of at least one aminotriazine compound.

**2.** The adhesive label according to the preceding claim, wherein said further monomer a3) is selected from monomers having at least two free-radically polymerizable, ethylenically unsaturated groups, copolymerizable monomers having at least one ketone group, vinyl esters of carboxylic acids comprising up to 20 C atoms, vinylaromatics having up to 20 C atoms, ethylenically unsaturated nitriles, acrylamides, vinyl halides, vinyl ethers of alcohols comprising 1 to 10 C atoms, aliphatic hydrocarbons having 2 to 8 C atoms and one or two double bonds, or mixtures of these monomers.

**3.** The adhesive label according to either of the preceding claims, wherein the acid monomers a2) are selected from acrylic acid, methacrylic acid, and a mixture thereof.

**4.** The adhesive label according to any of the preceding claims, wherein the principal monomers a1) are selected from C4 to C8 acrylates, C4 to C8 methacrylates, and mixtures thereof.

**5.** The adhesive label according to any of the preceding claims, wherein the acrylate copolymer has a glass transition temperature of -40 to -60°C.

**6.** The adhesive label according to any of the preceding claims, wherein the adhesive composition is one-component and is not radiation-curable.

**7.** The adhesive label according to any of the preceding claims, wherein the branching or crosslinking of the acrylate copolymer takes place through a branching system or crosslinking system which is selected from

(i) in an amount of 0.01% to 0.8% by weight, based on the sum of the monomers, copolymerized alkanediol di (meth)acrylates, and
(ii) addition of melamine/formaldehyde resin.

**8.** The adhesive label according to any of the preceding claims, wherein the plasticizer is selected from dialkyl adipates which are liquid at 20°C.

**9.** The adhesive label according to any of the preceding claims, wherein the acrylate copolymer of the adhesive composition remains adhering to the detached label to an extent of at least 95% by weight following the detachment of the label with basic, aqueous wash liquid.

**10.** The adhesive label according to any of the preceding claims, wherein the backing material is not perforated and is dimensionally stable under wash-off conditions.

**11.** The adhesive label according to any of the preceding claims, wherein the backing material is selected from paper,

polyethylene, polypropylene, cellulose, polyacetate, and polyester.

**12.** The adhesive label according to any of the preceding claims, wherein the amount of the adhesive composition applied is from 10 - 20 g/m$^2$ solids.

**13.** The adhesive label according to any of the preceding claims, wherein either the backing material is a polymeric film and the crosslinker system is copolymerized alkanediol diacrylate, or the backing material is paper and the crosslinker system is an addition of melamine/formaldehyde resin.

**14.** The use of an adhesive composition for producing adhesive labels detachable with basic, aqueous wash liquid from reusable packaging having glass surfaces or plastics surfaces, the adhesive composition comprising an aqueous polymer dispersion comprising

a) at least one dispersed, water-insoluble acrylate copolymer which is obtainable by free-radical polymerization, which is branched or crosslinked, which has a glass transition temperature of less than or equal to -20°C, and which is constructed of

a1) at least 60% by weight, based on the sum of
the monomers, of principal monomers selected from $C_1$ to $C_{20}$ alkyl acrylates and $C_1$ to $C_{20}$ alkyl methacrylates,
a2) 0.05% to 3% by weight, based on the sum of the monomers, of at least one ethylenically unsaturated, copolymerizable, $C_3$ to $C_6$ monocarboxylic or dicarboxylic acid, and
a3) 0% to 39.95% by weight, based on the sum of the monomers, of further monomers, different from the monomers a1 and a2, and

b) at least one plasticizer; and
the branching or crosslinking of the acrylate copolymer taking place through a branching system or crosslinking system which is selected from

(i) in an amount of 0.01% to 0.8% by weight, based on the sum of the monomers, copolymerized, branching or crosslinking monomers selected from monomers having at least two free-radically polymerizable, ethylenically unsaturated groups, and
(ii) addition of at least one aminotriazine compound.

**15.** The use according to the preceding claim, wherein detachment takes place with a wash liquid having a pH of 9 to 11 and at a temperature of 60 to 90°C.

## Revendications

**1.** Étiquette adhésive à matériau support insoluble dans l'eau, qui peut être collée à un article au moyen d'une composition d'agent adhésif appliquée sur celle-ci et qui peut être décollée de l'article avec un liquide de lavage aqueux basique à des températures supérieures à 25 °C, la composition d'agent adhésif étant une dispersion aqueuse de polymère qui continent :

a) au moins un copolymère d'acrylate insoluble dans l'eau, pouvant être obtenu par polymérisation radicalaire, dispersé, qui est ramifié ou réticulé, présente une température de transition vitreuse inférieure ou égale à -20 °C et qui est formé par

a1) au moins 60 % en poids, par rapport à la somme des monomères, de monomères principaux, choisis parmi les acrylates d'alkyle en $C_1$ à $C_{20}$ et les méthacrylates d'alkyle en $C_1$ à $C_{20}$,
a2) 0,05 à 3 % en poids, par rapport à la somme des monomères, d'au moins un acide mono- ou dicarboxylique en $C_3$ à $C_6$ éthyléniquement insaturé copolymérisable, et
a3) 0 à 39,95 % en poids, par rapport à la somme des monomères, d'autres monomères différents des monomères a1 et a2, et

b) au moins un plastifiant ; et
la ramification ou la réticulation du copolymère d'acrylate ayant lieu par un système de ramification ou de

réticulation, qui est choisi parmi

(i) une quantité de 0,01 à 0,8 % en poids, par rapport à la somme des monomères, de monomères ramifiant ou réticulant copolymérisés, choisis parmi les monomères contenant au moins deux groupes éthyléniquement insaturés polymérisables par voie radicalaire, et
(ii) l'ajout d'au moins un composé d'aminotriazine.

**2.** Étiquette adhésive selon la revendication précédente, **caractérisée en ce que** l'autre monomère a3) est choisi parmi les monomères contenant au moins deux groupes éthyléniquement insaturés polymérisables par voie radicalaire, les monomères copolymérisables contenant au moins un groupe cétone, les esters de vinyle d'acides carboxyliques contenant jusqu'à 20 atomes C, les composés aromatiques de vinyle contenant jusqu'à 20 atomes C, les nitriles éthyléniquement insaturés, les acrylamides, les halogénures de vinyle, les éthers de vinyle d'alcools contenant 1 à 10 atomes C, les hydrocarbures aliphatiques contenant 2 à 8 atomes C et une ou deux doubles liaisons ou les mélanges de ces monomères.

**3.** Étiquette adhésive selon l'une quelconque des revendications précédentes, **caractérisée en ce que** les monomères acides a2) sont choisis parmi l'acide acrylique, l'acide méthacrylique et leur mélange.

**4.** Étiquette adhésive selon l'une quelconque des revendications précédentes, **caractérisée en ce que** les monomères principaux a1) sont choisis parmi les acrylates en C4 à C8, les méthacrylates en C4 à C8 et leurs mélanges.

**5.** Étiquette adhésive selon l'une quelconque des revendications précédentes, **caractérisée en ce que** le copolymère d'acrylate présente une température de transition vitreuse de -40 à -60 °C.

**6.** Étiquette adhésive selon l'une quelconque des revendications précédentes, **caractérisée en ce que** la composition d'agent adhésif est monocomposante et non durcissable par des rayonnements.

**7.** Étiquette adhésive selon l'une quelconque des revendications précédentes, **caractérisée en ce que** la ramification ou la réticulation du copolymère d'acrylate a lieu par un système de ramification ou de réticulation, qui est choisi parmi :

(i) une quantité de 0,01 à 0,8 % en poids, par rapport à la somme des monomères, de di(méth)acrylates d'alcanediol copolymérisés, et
(ii) un ajout d'une résine de mélamine/formaldéhyde.

**8.** Étiquette adhésive selon l'une quelconque des revendications précédentes, **caractérisée en ce que** le plastifiant est choisi parmi les adipates de dialkyle liquides à 20 °C.

**9.** Étiquette adhésive selon l'une quelconque des revendications précédentes, **caractérisée en ce que** le copolymère d'acrylate de la composition d'agent adhésif reste collé sur l'étiquette décollée à hauteur d'au moins 95 % en poids après le décollement de l'étiquette avec un liquide de lavage aqueux basique.

**10.** Étiquette adhésive selon l'une quelconque des revendications précédentes, **caractérisée en ce que** le matériau support n'est pas perforé et a une forme stable dans les conditions de lavage.

**11.** Étiquette adhésive selon l'une quelconque des revendications précédentes, **caractérisée en ce que** le matériau support est choisi parmi le papier, le polyéthylène, le polypropylène, la cellulose, le polyacétate et le polyester.

**12.** Étiquette adhésive selon l'une quelconque des revendications précédentes, **caractérisée en ce que** la quantité de composition d'agent adhésif appliquée est de 10 à 20 $g/m^2$ de solide.

**13.** Étiquette adhésive selon l'une quelconque des revendications précédentes, **caractérisée en ce que** le matériau support est une feuille en plastique et le système de réticulation est un diacrylate d'alcanediol copolymérisé ou **en ce que** le matériau support est un papier et le système de réticulation est un ajout d'une résine de mélamine/formaldéhyde.

**14.** Utilisation d'une composition d'agent adhésif pour la fabrication d'étiquettes adhésives décollables avec un liquide de lavage aqueux basique d'emballages réutilisables à surfaces en verre ou en plastique, la composition d'agent

adhésif étant une dispersion aqueuse de polymère qui continent :

a) au moins un copolymère d'acrylate insoluble dans l'eau, pouvant être obtenu par polymérisation radicalaire, dispersé, qui est ramifié ou réticulé, présente une température de transition vitreuse inférieure ou égale à -20 °C et qui est formé par

a1) au moins 60 % en poids, par rapport à la somme des monomères, de monomères principaux, choisis parmi les acrylates d'alkyle en $C_1$ à $C_{20}$ et les méthacrylates d'alkyle en $C_1$ à $C_{20}$,
a2) 0,05 à 3 % en poids, par rapport à la somme des monomères, d'au moins un acide mono- ou dicarboxylique en $C_3$ à $C_6$ éthyléniquement insaturé copolymérisable, et a3) 0 à 39,95 % en poids, par rapport à la somme des monomères, d'autres monomères différents des monomères a1 et a2, et

b) au moins un plastifiant ; et
la ramification ou la réticulation du copolymère d'acrylate ayant lieu par un système de ramification ou de réticulation, qui est choisi parmi

(i) une quantité de 0,01 à 0,8 % en poids, par rapport à la somme des monomères, de monomères ramifiant ou réticulant copolymérisés, choisis parmi les monomères contenant au moins deux groupes éthyléniquement insaturés polymérisables par voie radicalaire, et
(ii) l'ajout d'au moins un composé d'aminotriazine.

**15.** Utilisation selon la revendication précédente, **caractérisée en ce que** le décollement avec un liquide de lavage a lieu à un pH de 9 à 11 et à une température de 60 à 90 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0146329 A
- EP 951004 A
- US 4269749 A


### In der Beschreibung aufgeführte Nicht-Patentliteratur


- **W. MÄCHTLE.** *Makromolekulare Chemie,* 1984, vol. 185, 1025-1039
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208